# NEUE EUROPÄISCHE PATENTSCHRIFT

(11) **EP 2 547 547 B2**
(45) Veröffentlichungstag und Bekanntmachung des Hinweises auf die Entscheidung über den Einspruch: **21.03.2018**
(45) Hinweis auf die Patenterteilung: 04.03.2015
(21) Anmeldenummer: 11710446.3
(22) Anmeldetag: 08.03.2011
(51) Int. Cl.: B60N 2/16, B60N 2/06, B60N 2/42

(54) **VERSTELLVORRICHTUNG, INSBESONDERE HÖHEN- ODER LÄNGSVERSTELLVORRICHTUNG FÜR KRAFTFAHRZEUGSITZE**
ADJUSTING DEVICE, IN PARTICULAR HEIGHT OR LONGITUDINAL ADJUSTING DEVICE FOR MOTOR VEHICLE SEATS
DISPOSITIF DE RÉGLAGE, EN PARTICULIER DISPOSITIF DE RÉGLAGE EN HAUTEUR ET EN LONGUEUR POUR DES SIÈGES AUTOMOBILES

(30) Priorität: 17.03.2010 DE 102010002964
(43) Veröffentlichungstag der Anmeldung: 23.01.2013
(73) Patentinhaber: Adient Luxembourg Holding S.à r.l., 1855 Luxembourg (LU)
(72) Erfinder: STANIC, Ivica, 41542 Dormagen (DE); KUNTZ, Oliver, 42929 Wermelskirchen (DE); STURM, Christian, 47804 Krefeld (DE)
(74) Vertreter: Liedhegener, Ralf
(86) Internationale Anmeldenummer: PCT/EP2011/053462
(87) Internationale Veröffentlichungsnummer: WO 2011/113725

(56) Entgegenhaltungen:
- EP-A2- 0 759 374
- EP-A2- 2 067 652
- DE-A1-102006 020 174
- US-A- 5 303 983
- US-B1- 6 244 660

## Beschreibung

Die Erfindung betrifft eine Verstellvorrichtung, insbesondere Höhen- oder Längsverstellung für Kraftfahrzeugsitze, mit
- einer Gewindespindel, die einenends in einem Getriebegehäuse und anderenends in einer Aufnahmeeinheit, die ein an das Spindelgewinde angepasstes Innengewinde aufweist, drehbar gelagert ist und
- einer Motoreinheit, die mit der Gewindespindel in Wirkverbindung steht.

Ferner betrifft die Erfindung ein Sitzuntergestell für Kraftfahrzeugsitze mit einer Verstellvorrichtung.

Kraftfahrzeugsitze moderner Fahrzeuge weisen eine Vielzahl von Einstellmöglichkeiten auf, die es ermöglichen, den Kraftfahrzeugsitz optimal an die jeweilige Person anzupassen. Zur Komfortsteigerung bei der Einstellung des Kraftfahrzeugsitzes werden dabei zunehmend motorisch angetriebene Verstellvorrichtungen der eingangs genannten Art verwendet, welche über entsprechende Bedienelemente betätigbar sind. Zur Verstellung einzelner Sitzbereiche, bzw. Sitzstrukturen zueinander werden dabei bevorzugt Gewindespindeln verwendet, welche in einer mit einem Innengewinde ausgestatteten Aufnahmeeinheit nach Art eines Mutter-Spindelmechanismus eine Verstellung der Sitzstrukturen zueinander ermöglichen. Die Verstellvorrichtungen sind hierzu einerseits mit der zu verstellenden Sitzstruktur und andererseits mit einer weiteren Sitzstruktur, bspw. einer Sitzoberschiene verbunden, gegenüber der die zu verstellende Sitzstruktur bewegbar ist und die eine Abstützung der Verstellvorrichtung ermöglicht.

In Verbindung mit der Ausgestaltung der Kraftfahrzeugsitze mit sogenannten mitfahrenden Gurtschlössern, d. h. unmittelbar am Kraftfahrzeugsitz angeordneten und nicht direkt an der Fahrzeugkarosserie angeordneten Gurtschlössern besteht konstruktionsbedingt das Erfordernis, die bei einem Crashfall eines Fahrzeugs auftretenden Kräfte über die Verstellvorrichtungen, insbesondere eine Höhenverstellung zu übertragen. Dies bedeutet, dass die Gewindespindel, das Getriebegehäuse und die Aufnahmeeinheit in diesem Crashfall einer erhöhten Zug-/Druckbelastung unterliegen. Einem Versagen der Verstellvorrichtung muss dabei zwingend vorgebeugt werden, um ein Kollabieren des die Person aufnehmenden Kraftfahrzeugsitzes zu verhindern, da dessen Stabilität maßgeblich für einen funktionierenden Insassenschutz im Crashfall ist. Mit Crashfall wird dabei an dieser Stelle sowie nachfolgend auf einen Fahrzeugfrontalaufprall bzw. Heckaufprall abgestellt.

Aus dem Stand der Technik ist es bereits bekannt, eine separate Crashsperre vorzusehen, die im Falle eines drohenden oder stattfindenden Kollabierens der Verstellvorrichtung die durch diese miteinander verbundenen Sitzstrukturen gegeneinander stabilisiert. Derartige Crashsperren weisen jedoch den Nachteil auf, dass sie sowohl zu einem höheren Eigengewicht des Kraftfahrzeugsitzes führen als auch die Herstellungskosten des Kraftfahrzeugsitzes aufgrund zusätzlicher Bauteile verteuern.

Der Erfindung liegt die Aufgabe zugrunde, eine Verstellvorrichtung sowie ein Sitzuntergestell für Kraftfahrzeugsitze mit einer Verstellvorrichtung bereitzustellen, die im Crashfall in erforderlichem Maße die auftretenden Kräfte überträgt.

EP 1 223 073 beschreibt eine Verstellvorrichtung gemäß dem Oberbegriff von Anspruch 1.

Die Erfindung löst die Aufgabe durch eine Verstellvorrichtung mit den Merkmalen des Anspruchs 1 sowie ein Sitzuntergestell mit den Merkmalen des Anspruchs 13. Vorteilhafte Weiterbildungen der Verstellvorrichtung sind in den Ansprüchen 2-12 angegeben. Kennzeichnend für die erfindungsgemäße Verstellvorrichtung ist dabei, dass das Verstärkungselement zur Verbindung mit der zu verstellenden Sitzeinheit Aufnahmeöffnungen zur Anordnung von Verbindungsmitteln aufweist, wobei das Verstärkungselement U-förmig ausgebildet ist, wobei die freien Schenkel mit Aufnahmeöffnungen für die Verbindungsmittel versehen sind und der sich zwischen den Schenkeln erstreckende Abschnitt die Eingriffsnut aufweist.

Der Erfindung liegt die Erkenntnis zugrunde, bei entsprechend sowie zufällig der dass die Beschädigung der Verstellvorrichtung daraus resultiert, dass es bei einem Crashfall im Fall von mitfahrenden Gurtschlössern zu einer erhöhten Zugbelastung der Verstellvorrichtung kommt, die zu einem Ausreißen der Gewindespindel gegenüber dem Getriebegehäuse führt. Eben einem solchen Zusammenbrechen der Verbindung zwischen der Gewindespindel und dem Getriebegehäuse wird dadurch vorgebeugt, dass in dem Getriebegehäuse ein Verstärkungselement derart angeordnet ist, dass es die auftretenden Kräfte sowohl zwischen der Gewindespindel und dem Verstärkungselement als auch zwischen dem Verstärkungselement und dem Getriebegehäuse überträgt. Das Verstärkungselement erreicht dies durch eine im Einzelfall festzulegende, ausreichend große Kontaktfläche mit der Gewindespindel einerseits und dem Getriebegehäuse andererseits. Die Verwendung des Verstärkungselements zeichnet sich dabei insbesondere dadurch aus, dass aufgrund der besonders guten Kraftübertragung zwischen dem Getriebegehäuse und der Gewindespindel durch das Verstärkungselement auf weitergehende Verstärkungen der Gewindespindel und insbesondere des als kritisch anzusehenden Getriebegehäuses verzichtet werden kann, so dass die Verstellvorrichtung insgesamt gegenüber bekannten, jedoch nicht zur Übertragung von Crashkräften geeigneten Verstellvorrichtungen ein kaum erhöhtes Eigengewicht aufweist.

Die Anordnung des Verstärkungselements in dem Getriebegehäuse kann grundsätzlich, sofern eine Übertragung der im Crashfall auftretenden Kräfte zwischen dem Getriebegehäuse und der Gewindespindel gewährleistet ist, in beliebiger Weise erfolgen. So kann insbesondere eine Ausgestaltung gewählt werden, welche allein zur Übertragung der im Fahrzeugfrontalcrash auf die Gewindespindel wirkenden Zugkräfte geeignet ist. Nach einer besonders vorteilhaften Ausgestaltung der Erfindung ist das Verstärkungselement jedoch zur Aufnahme von in Längsachsenrichtung auf die Gewindespindel wirkender Zug- und/oder Druckkräfte ausgebildet. Die Ausgestaltung der Erfindung, wonach sowohl Zug- als auch Druckkräfte durch das Verstärkungselement wirksam übertragen werden, erhöht die Stabilität der Verstellvorrichtung in ergänzendem Maße und gewährleistet, dass es auch bei von Frontalcrashs abweichenden Crashsituationen nicht zu einem Kollabieren der Verstellvorrichtung kommt.

Wie bereits zuvor ausgeführt ist die Verbindung zwischen der Gewindespindel und dem Verstärkungselement grundsätzlich frei wählbar, sofern gewährleistet ist, dass im Falle eines Crashs das Verstärkungselement mit der Gewindespindel derart in Wirkverbindung steht, dass die auftretenden Belastungen wirksam zwischen der Gewindespindel und dem Verstärkungselement übertragen werden. Nach einer vorteilhaften Ausgestaltung der Erfindung ist dabei vorgesehen, dass das Verstärkungselement im Normalbetrieb, d. h. während der normalen Verstellung des Kraftfahrzeugsitzes sowie in der eingestellten Position, derart berührungslos gegenüber der Gewindespindel angeordnet ist, dass diese erst im Crashfall in Kontakt mit dem Verstärkungselement kommt. Gemäß dieser Weiterbildung der Erfindung sind das Verstärkungselement und die Gewindespindel, bzw. die im Crashfall miteinander zusammenwirkenden Kontaktflächen der Gewindespindel und des Verstärkungselements derart im Abstand voneinander sowie in dem Getriebegehäuse angeordnet, dass diese erst im Crashfall miteinander in Kontakt kommen. Diese Ausgestaltung weist den Vorteil auf, dass im Normalbetrieb zwischen der Gewindespindel und dem Verstärkungselement keine Reibung vorliegt. Schleif- oder Reibgeräuschen, die aus einem Kontakt zwischen dem Verstärkungselement und der Gewindespindel im Normalbetrieb resultieren würden, werden somit ausgeschlossen. Hierdurch können die Herstellungskosten für die erfindungsgemäße Verstellvorrichtung in ergänzender Weise gesenkt werden, wobei gleichzeitig die Funktion erhalten bleibt.

Grundsätzlich erlaubt - eine entsprechende Ausgestaltung des Verstärkungselements vorausgesetzt - bereits dessen Anordnung im Getriebegehäuse relativ gegenüber der Gewindespindel, dass über die vorbestimmte Kontaktfläche zwischen dem Verstärkungselement und der Gewindespindel in zuverlässiger Weise die im Crashfall auftretenden Kräfte von dem Verstärkungselement auch auf das Getriebegehäuse übertragen werden. Das Getriebegehäuse ist dabei seinerseits derart ausgestaltet, dass auch die im Crashfall auftretenden Kräfte zuverlässig zwischen dem Getriebegehäuse und der zu verstellenden Sitzeinheit übertragen werden. Nach einer besonders vorteilhaften Ausgestaltung der Erfindung ist das Verstärkungselement jedoch derart in dem Getriebegehäuse angeordnet, dass es einerseits zur Anbindung an einer zu verstellenden Sitzeinheit und andererseits zur Aufnahme von in einem Crashfall in Längsachsenrichtung der Gewindespindel wirkenden Kräfte geeignet ist.

Gemäß dieser Ausgestaltung der Erfindung dient das Verstärkungselement nicht allein zur zuverlässigen Kraftübertragung der im Crashfall auftretenden Kräfte zwischen dem Verstärkungselement und der Gewindespindel, sondern ist darüber hinaus dazu geeignet, unmittelbar die Kräfte zwischen der zu verstellenden Sitzeinheit und dem Verstärkungselement zu übertragen. Diese Ausgestaltung der Erfindung ermöglicht es, das Getriebegehäuse unabhängig von den im Normalbetrieb oder Crashfall bestehenden Kräften oder nur unter Berücksichtigung der im Normalbetrieb auftretenden Belastungen auszulegen. Sämtliche im Normal- und/oder Crashfall auftretenden Kräfte können in zuverlässiger Weise über das Verstärkungselement übertragen werden. Hierdurch besteht die Möglichkeit, das Getriebegehäuse besonders klein und kostengünstig auszugestalten, was in ergänzender Weise die Kosten für die Herstellung der Verstellvorrichtung reduziert.

Das Verstärkungselement weist zur Verbindung mit der zu verstellenden Sitzeinheit Aufnahmeöffnungen zur Anordnung von Verbindungsmitteln auf. Diese ermöglichen es, die Verstellvorrichtung über das Verstärkungselement in bekannter Weise mit der zu verstellenden Sitzeinheit zu verbinden, so dass auf eine separate Verbindung der Sitzeinheit mit dem Verstärkungselement verzichtet werden kann. Verbindungsmittel, wie bspw. Verbindungsbolzen erstrecken sich dabei idealerweise durch das Getriebegehäuse und das Verstärkungselement sowie entsprechend ausgebildeter Aufnahmeöffnungen an der zu verstellenden Sitzeinheit.

Nach einer besonders vorteilhaften Ausgestaltung der Erfindung ist das Verstärkungselement derart angeordnet, dass die Verbindungsmittel im Normalbetrieb im Abstand von den Aufnahmeöffnungen anordbar sind. Diese Ausgestaltung der Erfindung ermöglicht es, auf eine spezielle Ausgestaltung der Aufnahmeöffnungen des Verstärkungselements zu verzichten, da diese dann im Normalbetrieb nicht in Kontakt mit dem Verbindungsmittel, bspw. einem Verbindungsbolzen stehen. Insofern können Reibbelastungen zwischen dem Verbindungsmittel und den Aufnahmeöffnungen bei der Auslegung der Verstellvorrichtung außer Acht gelassen werden. Diese Ausgestaltung der Erfindung sieht bspw. vor, dass im Normalbetrieb nur das Getriebegehäuse in Kontakt mit dem Verbindungsbolzen steht und dieser erst im Crashfall mit den Aufnahmeöffnungen des Verstärkungselements in Kontakt gelangt.

Die Ausgestaltung des Verstärkungselements sowie die entsprechende Ausgestaltung der Gewindespindel zur Übertragung der im Crashfall auftretenden Kräfte zwischen der Gewindespindel und dem Verstärkungselement ist grundsätzlich frei wählbar. Nach einer besonders vorteilhaften Ausgestaltung der Erfindung weist das Verstärkungselement jedoch hierzu eine Eingriffsnut zur Aufnahme eines eine umlaufende Vertiefung aufweisenden Abschnitts der Gewindespindel auf, wobei das Verstärkungselement im Normalbetrieb vorzugsweise im Abstand von der Vertiefung angeordnet ist. Gemäß dieser Ausgestaltung der Erfindung weist das Verstärkungselement eine einenends offene Nut auf, wobei die Nutbreite an eine Vertiefung der Gewindespindel angepasst ist, welche im montierten Zustand in der Nut angeordnet ist. In Längsachsenrichtung der Gewindespindel schließt sich dabei zumindest in Richtung des Getribegehauses ein Abschnitt der Gewindespindel an, der einen höheren Durchmesser als die Eingriffsnut aufweist. Im Crashfall gelangt dieser Bereich mit dem die Eingriffsnut umgebenden Bereich des Verstärkungselements in Kontakt, so dass hierüber wirkungsvoll die Kfäfte zwischen dem Verstärkungselement und der Gewindespindel übertragen werden können

Im Normalbetrieb ist die Gewindespindel im Abstand von dem Verstärkungselement angeordnet, so dass zwischen der Gewindespindel und dem Verstärkungselement keine Reibung vorliegt, welche einer Auslegung zur Vermeidung von Störungen und/oder Schleifgeräuschen bedarf. Die einseitig offene Ausgestaltung des Verstärkungselements mit der Eingriffsnut erlaubt überdies eine besonders einfache Montage der Verstellvorrichtung, wobei die Gewindespindel mit der umlaufenden Vertiefung lediglich in die Eingriffsnut eingesetzt werden muss.

Das Verstärkungselement ist U-förmig ausgebildet, wobei die freien Schenkel mit Aufnahmeöffnungen für die Verbindungsmittel versehen sind und der sich zwischen den Schenkeln erstreckende Abschnitt die Eingriffsnut aufweist. Diese Ausgestaltung der Erfindung zeichnet sich dadurch aus, dass sich das Verstärkungselement besonders einfach herstellen sowie in dem Getriebegehäuse anordnen lässt. Die freien Schenkel ermöglichen über die Aufnahmeöffnungen die Anbindung an einer zu verstellenden Sitzeinheit über ein Verbindungsmittel. Der die Schenkel verbindende Abschnitt erlaubt die Aufnahme der Gewindespindel in der Eingriffsnut.

Nach einer weiteren Ausgestaltung der Erfindung weisen die Verbindungsmittel und/oder die Aufnahmeöffnungen Gleiteigenschaften auf, und sind insbesondere zumindest abschnittsweise mit Kunststoff umspritzt. Gemäß dieser Ausgestaltung der Erfindung wird auch im Falle einer im Normalbetrieb bestehenden Kontaktierung zwischen den Verbindungsmitteln und den Aufnahmeöffnungen gewährleistet, dass ein störungsfreier Betrieb gewährleistet ist, bei dem es nicht zu einem Blockieren oder zu komfortbeeinträchtigenden Störgeräuschen kommt. Die Gleiteigenschaften können dabei durch eine entsprechende Materialwahl oder Beschichtung der Verbindungsmittel oder Aufnahmeöffnungen erreicht werden. Besonders vorteilhafterweise sind die Kontaktflächen mit Kunststoff umspritzt, um hierdurch einen störungsfreien Betrieb gewährleisten zu können.

Insbesondere im Falle der als eine vorteilhafte Ausgestaltung dargestellten Herstellung der Verbindung zwischen der Gewindespindel und dem Verstärkungselement über eine Eingriffsnut in einem sich zwischen zwei Schenkeln erstreckenden Abschnitt ist nach einerbesonders vorteilhaften Ausgestaltung der Erfindung vorgesehen, dass der sich zwischen den beiden Schenkeln erstreckende Abschnitt, vorzugsweise der sich um die Eingriffsnut angeordnete Bereich des Abschnitts, insbesondere der unterhalb der Eingriffsnut angeordnete Bereich des Abschnitts eine gegenüber den freien Schenkeln höhere Materialdicke aufweist, wobei eine höhere Materialdicke eines Bereichs um die Eingriffsnut auch bei einem Verstärkungselement ohne Schenkel zur Verbindung mit der zu verstellenden Sitzeinheit realisierbar ist. Eine entsprechende Ausgestaltung der Erfindung gewährleistet in besonders zuverlässiger Weise eine Übertragung der im Crashfall auftretenden Kräfte zwischen der Gewindespindel und dem Verstärkungselement. Eine Verstärkung des Bereichs um die Eingriffsnut verhindert zudem, dass es zu einem Aufbiegen oder Ausreißen der Nut kommt, in deren Folge die Gewindespindel mit dem Verstärkungselement außer Eingriff gelangen könnte.

Das Getriebegehäuse kann, wie zuvor dargestellt, zur Übertragung von im Crashfall auftretenden Kräften zwischen dem Verstärkungselement und dem Getriebegehäuse ausgelegt sein. Bei einer entsprechenden Ausgestaltung des Verstärkungselements mit Aufnahmeöffnungen zur Anbindung an die zu verstellende Sitzeinheit ist auch eine Auslegung lediglich zur Aufnahme der im Normalbetrieb auftretenden Kräfte möglich, sofern das Verbindungselement im Normalbetrieb im Abstand von den Aufnahmeöffnungen angeordnet ist. Die Ausgestaltung des Getriebegehäuses kann aber auch ohne Berücksichtigung der im Normalbetrieb auftretenden Kräfte erfolgen, wenn die Verbindungsmittel auch im Normalbetrieb an den Aufnahmeöffnungen des Verstärkungselements anliegen.

Nach einer besonders vorteilhaften Ausgestaltung der Erfindung ist das Getriebegehäuse aus einem Kunststoff, insbesondere glasfaserverstärktem Kunststoff gebildet. Ein Getriebegehäuse gemäß dieser Weiterbildung der Erfindung zeichnet sich dabei dadurch aus, dass es besonders leicht ist und in zuverlässiger Weise die auftretenden Kräfte überträgt. Insbesondere die Verwendung eines glasfaserverstärktem Kunststoffes zeichnet sich dabei dadurch aus, auch im Falle der Verwendung des Verstärkungselements, welches nicht zur Anbindung des Getriebegehäuses an der zu verstellenden Sitzeinheit geeignet ist, sämtliche auftretenden Kräfte aufnehmen und auf die Sitzeinheit übertragen zu können.

Die Anordnung des Verstärkungselements in dem Getriebegehäuse kann in beliebiger Weise erfolgen. Denkbar ist bspw. die Ausgestaltung eines Getriebegehäuses derart, dass das Verstärkungselement lediglich in das Getriebegehäuse in eine entsprechende Aussparung eingesetzt wird und dann durch einen Gehäusedeckel oder eine zweite Gehäusehälfte verschlossen wird. Nach einer weiteren Ausgestaltung der Erfindung ist das Getriebegehäuse jedoch durch Kunststoffspritzen um das Verstärkungselement herum hergestellt. Diese Ausgestaltung der Erfindung zeichnet sich dabei dadurch aus, dass eine besonders gute und insbesondere spielfreie Verbindung zwischen dem Getriebegehäuse und dem Verstärkungselement hergestellt werden kann. Gleichzeitig lässt sich das Getriebegehäuse besonders einfach und kostengünstig herstellen.

Die Auswahl des Verstärkungselements kann allein unter Berücksichtigung der im Crashfall zu übertragenden Kräfte erfolgen. Nach einer besonders vorteilhaften Ausgestaltung der Erfindung ist das Verstärkungselement als Stanzbiegeteil ausgebildet. Dieses zeichnet sich dadurch aus, dass es besonders einfach und kostengünstig herstellbar ist, so dass eine kostengünstige Herstellung der Verstellvorrichtung in besonderer Weise gewährleistet werden kann.

Zum Betrieb der Verstellvorrichtung können grundsätzlich alle Arten von Antriebseinheiten genutzt werden. Nach einer besonders vorteilhaften Weiterbildung der Erfindung ist die Motoreinheit jedoch durch einen Elektromotor gebildet, wobei ein auf der Abtriebswelle des Elektromotors angeordnetes erstes Verzahnungselement, insbesondere eine Schnecke im Getriebegehäuse zum Antrieb der Gewindespindel mit einem im Bereich des Getriebegehäuses auf der Gewindespindel angeordneten zweiten Verzahnungselement, insbesondere einem Schneckenrad in Eingriff befindlich ist. Diese Ausgestaltung der Erfindung zeichnet sich dadurch aus, dass die Kraftübertragung zwischen dem Elektromotor und der Gewindespindel gekapselt in dem Getriebegehäuse stattfindet, wo die Verbindung vor äußeren Einflüssen geschützt ist. Einem Verschmutzen der Wirkverbindung zwischen dem ersten und zweiten Verzahnungselement wird wirksam vorgebeugt, wodurch die Zuverlässigkeit der Verstellvorrichtung in ergänzender Weise gesteigert werden kann. In besonderer Weise zeichnet sich dabei die Verwendung eines Schneckenrades sowie einer Schnecke aus, die eine besonders zuverlässige sowie geräuscharme Übertragung ermöglichen.

Kennzeichnend für das erfindungsgemäße Sitzuntergestell für einen Kraftfahrzeugsitz mit einer eine erste und eine zweite, relativ zueinander verstellbare Sitzstruktur verbindenden Verstellvorrichtung ist, dass die Aufnahmeeinheit mit ihrem dem Getriebegehäuse abgewandten Ende mit der ersten und das Getriebegehäuse mit der zweiten Sitzstruktur verbunden ist. Hierdurch wird gewährleistet, dass die Verstellvorrichtung im Crashfall die auftretenden Kräfte zwischen der ersten und zweiten Sitzstruktur überträgt. Aufgrund der besonderen Ausgestaltung der Verstellvorrichtung wird dabei in besonderer Weise gewährleistet, dass es nicht zu einem Zusammenbrechen der Verstellvorrichtung kommt, durch die die Stützfunktion des Sitzes gegenüber der auf dem Sitz angeordneten Person verloren geht.

Ausführungsbeispiele der Erfindung werden nachstehend mit Bezug auf die Zeichnungen näher erläutert. In den Zeichnungen zeigen:
- Fig. 1: eine Skizze einer Seitenansicht eines Teilbereichs eines Kraftfahrzeugsitzes mit einer daran angeordneter Verstellvorrichtung;
- Fig. 2: in einer perspektivischen Ansicht eine Explosionsdarstellung eines Getriebegehäuses mit einem im Getriebegehäuse angeordneten Abschnitt einer Gewindespindel;
- Fig. 3: eine perspektivische Ansicht einer Gewindespindel im Eingriff mit einem Verstärkungselement;
- Fig. 4: eine perspektivische Ansicht eines Verstärkungselements;
- Fig. 5: eine perspektivische Ansicht der Verstellvorrichtung von Fig. 1 mit Motoreinheit im montierten Zustand;
- Fig. 6: in einer Explosionsdarstellung eine Gewindespindel, ein Verstärkungselement und ein Getriebegehäuse einer zweiten Ausführungsform der Verstellvorrichtung von Fig. 5;
- Fig. 7: eine perspektivische Ansicht der Gewindespindel im Zusammenwirken mit dem Verstärkungselement und
- Fig. 8: eine perspektivische Ansicht eines Getriebegehäuses mit darin angeordneter Gewindespindel einer dritten Ausführungsform einer Verstellvorrichtung.

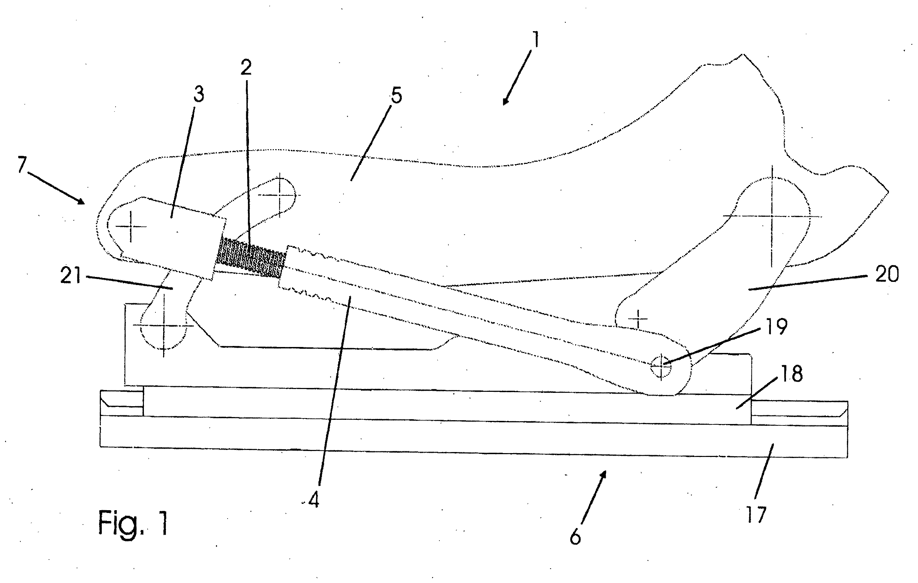

In Fig. 1 ist ein Teilbereich eines Kraftfahrzeugsitzes mit einer daran angeordneten Verstellvorrichtung 1 schematisch dargestellt. Die Verstellvorrichtung 1 erstreckt sich dabei zwischen einer Sitzeinheit 5 und einer Sitzoberschiene 18, die ihrerseits an einer am Fahrzeugboden anordbaren Sitzunterschiene 17 verschiebbar gelagert ist.

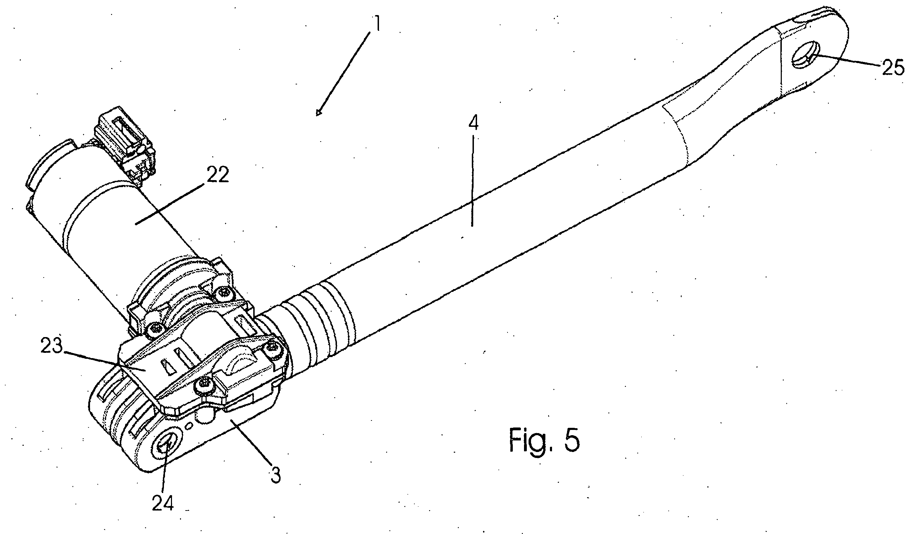

Die eine Sitzhöhenverstellung ermöglichende, in Fig. 5 perspektivisch dargestellte Verstellvorrichtung 1 weist einenends ein Getriebegehäuse 3, welches gelenkig mit der Sitzeinheit 5 verbunden ist und anderenends, an dem dem Getriebegehäuse 3 gegenüberliegenden Ende, eine Aufnahmeeinheit 4 in Form eines Halterohres auf, das über einen Gelenkbolzen 19 mit der Sitzoberschiene 18 des Kraftfahrzeugsitzes gelenkig verbunden ist. Die Verstellvorrichtung 1 ermöglicht durch ein Verdrehen der Gewindespindel 2 über eine an dem Getriebegehäuse 3 angeordnete Motoreinheit 22, eine Höhenverstellung der Sitzeinheit 5 gegenüber der Sitzunterschiene 17, bzw. Sitzoberschiene 18. Die Sitzhöhenverstellung der Sitzeinheit 5 resultiert dabei aus einer Längenänderung der Verstellvorrichtung 1, hervorgerufen durch Verdrehen der Gewindespindel 2 gegenüber dem Halterohr, welches ein an die Gewindespindel 2 angepasstes Innengewinde aufweist. Durch ein Verdrehen der Gewindespindel 2 verändert sich der Abstand zwischen dem Gelenkbolzen 19 und dem Getriebegehäuse 3. Aufgrund der gelenkigen Anbindung der Sitzeinheit 5 mit der Sitzoberschiene 18 über zwei Schwingen 20, 21 resultiert aus der Längenänderung der Verstellvorrichtung 1 eine Höhenverlagerung der Sitzeinheit 5. Die Verstellvorrichtung 1 ermöglicht somit eine relative Verstellung der ersten Sitzstruktur 6, gebildet aus der Sitzunterschiene 17 und der Sitzoberschiene 18 gegenüber der zweiten Sitzstruktur 7, gebildet durch die Sitzeinheit 5.

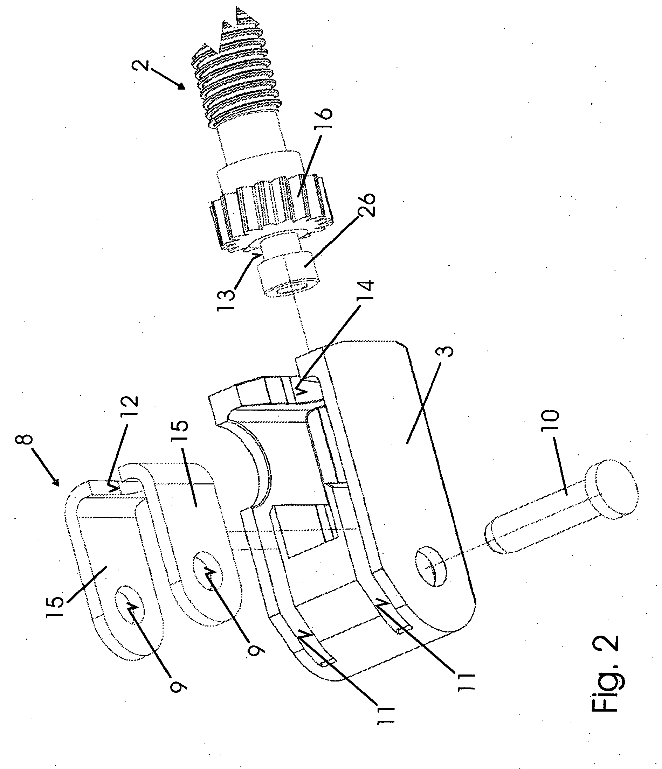

Zum Anschluss der Gewindespindel 2 an die Motoreinheit 22 ist auf der Gewindespindel 2 ein Verzahnungselement in Form eines Schneckenrades 16 angeordnet, welches mit einem Verzahnungselement der Motoreinheit 22 im montierten Zustand der Verstellvorrichtung 1 in Eingriff befindlich ist. Die Gewindespindel 2 ist dabei derart in dem Getriebegehäuse 3 drehbar gelagert, dass das Schneckenrad 16 innerhalb des Getriebegehäuses 3 mit dem Verzahnungselement der Motoreinheit 22 zusammenwirkt (vgl. Fig. 2).

Das Getriebegehäuse 3 weist ein in eine Aussparung 11 des Getriebegehäuses 3 eingelegtes Verstärkungselement 8 auf. Im Crashfall überträgt das Verstärkungselement 8 die auf die Sitzstruktur 7 wirkenden Kräfte unmittelbar auf die Gewindespindel 2 und hierüber auf die erste Sitzstruktur 6. Das Verstärkungselement 8 ist zur Verbindung der zweiten Sitzstruktur 7 mit der Gewindespindel 2 U-förmig ausgebildet und weist an seinen freien Schenkeln jeweils eine Aufnahmeöffnung 9 und an dem die freien Schenkel 15 verbindenden, sich zwischen den Schenkeln 15 erstreckende Abschnitt eine einerseits offene Eingriffsnut 12 auf. Im montierten Zustand der Verstellvorrichtung 1 sowie dieser an der zu verstellenden Sitzeinheit 5 erstreckt sich ein Verbindungsbolzen 10 durch das Getriebegehäuse 3 sowie durch die Aufnahmeöffnungen 9 und die Gewindespindel 2 ist mit einer umlaufenden Vertiefung 13 in der Nut 12 des Verstärkungselements 8 angeordnet. Ein sich in Richtung des Getriebegehäuses 3 erstreckender, an die Vertiefung 13 anschließender Gewindespindelkopf 26 weist einen größeren Durchmesser als die Eingriffsnut 12 auf. Im Falle eines Crashs kommt es zum Zusammenwirken des Gewindespindelkopfes 26 mit dem Verstärkungselement 8, so dass die Gewindespindel 2 nicht aus dem Getriebegehäuse 3 herausgezogen werden kann.

Die Kraftübertragung erfolgt über die einander zugewandten Seiten von Gewindespindelkopf 26 und Verstärkungselement 8, die erst in Folge der Crashbelastung miteinander in Kontakt kommen, da sie im Normalbetrieb im Abstand voneinander angeordnet sind, um Reibgeräuschen vorzubeugen.

Zur Anbindung des Getriebegehäuses 3 an der Sitzeinheit 5 sowie zur Übertragung der im Falle eines Unfalls wirkender Kräfte dient der Befestigungsbolzen 10, der sich im montierten Zustand sowohl durch das Getriebegehäuse 3 als auch durch die Aufnahmeöffnung 9 des Verstärkungselements 8 erstreckt. Im Crashfall auftretende Kräfte können somit unmittelbar zwischen der Sitzeinheit 5 über das Verstärkungselement 8 auf die Gewindespindel 2 übertragen werden. Eine Belastung des Getriebegehäuses 3, die zu dessen Zerstörung führen könnte, bzw. ein Ausreißen der Gewindespindel 2 aus dem Getriebegehäuse 3 wird somit wirksam verhindert.

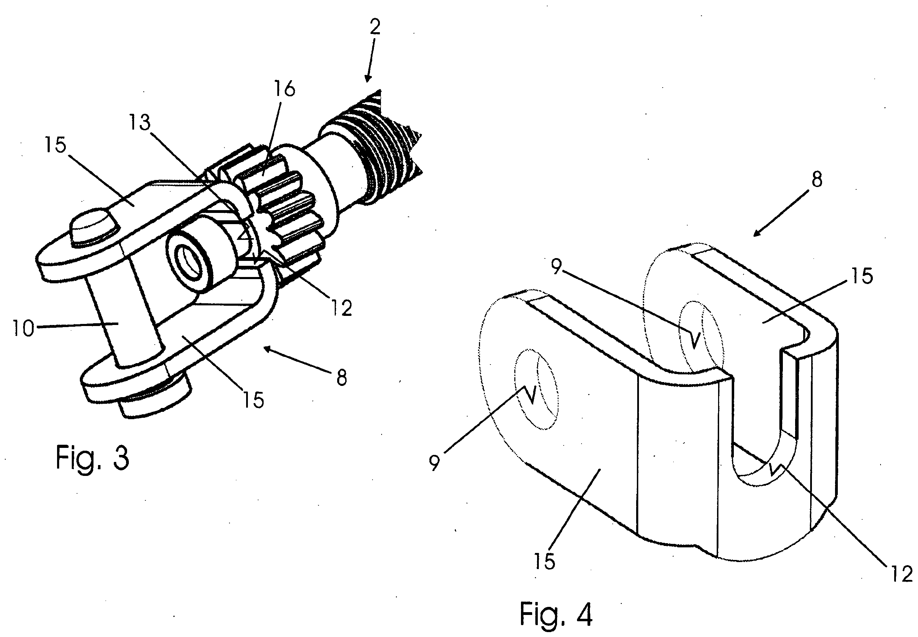

In Fig. 3 ist zur Verdeutlichung der Funktion des Verstärkungselements 8 dieses im Zusammenwirken mit der Gewindespindel 2 dargestellt, in der die Aussparung 13 der Gewindespindel 2 in der Eingriffsnut 12 des Verstärkungselements 8 angeordnet ist. Das Verstärkungselement 8 weist, um ein Aufbiegen des als Blechstanzteil ausgebildeten Bauteils zu verhindern, unterhalb der Eingriffsnut 12 eine Materialverbreiterung auf, die dem Verstärkungselement 8 eine erhöhte Stabilität verleiht (vgl. Fig. 4).

Die in Fig. 5 perspektivisch dargestellte Verstellvorrichtung 1 unterscheidet sich im montierten Zustand mit angeschlossener Motoreinheit 22 und durch einen Gehäusedeckel 23 verschlossenen Getriebegehäuse 3 im Wesentlichen nicht von den nachfolgend dargestellten Verstellvorrichtungen 1a. Die Aufnahmeeinheit 4 wird durch das Halterohr gebildet, welches auf seinem dem Getriebegehäuse 3, 3a gegenüberliegenden Ende in einem abgeflachten Bereich eine Öffnung 25 zur Aufnahme von Befestigungsmitteln aufweist, mittels derer die Verstellvorrichtung 1, 1a gelenkig mit einer Sitzoberschiene 18 verbunden werden kann.

Das Halterohr weist an seinem dem Getriebegehäuse 3, 3a zugewandten Ende ein Innengewinde auf, mit welchem sich die Gewindespindel 2,2a mit ihrem Außengewinde in Eingriff befindet. Mit dem dem Halterohr gegenüberliegenden, ein Schneckenrad 16 aufweisenden Ende der Gewindespindel 2, 2a ist diese drehbar in dem Getriebegehäuse 3, 3a gelagert, wobei sich die Gewindespindel 2,2a durch eine Ausnehmung 14 des Getriebegehäuses 3, 3a erstreckt.

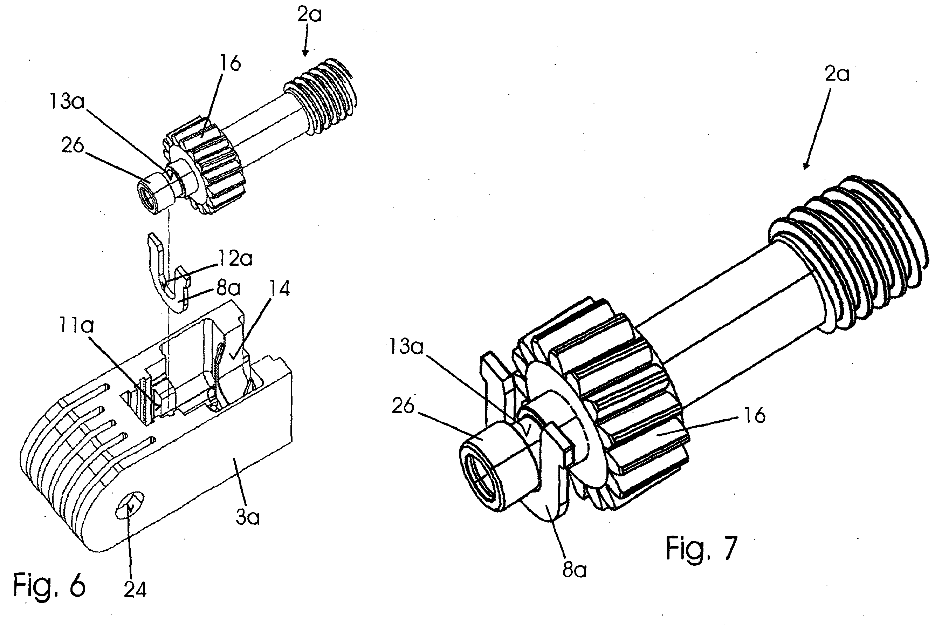

Die in den Fig. 6 und 7 dargestellte zweite Ausführungsform der Verstellvorrichtung 1a unterscheidet sich von der zuvor dargestellten Verstellvorrichtung 1 insbesondere durch die abweichende Ausgestaltung des Verstärkungselements 8a. Dieses weist keine Schenkel 15 zur Anbindung an einer zu verstellenden Sitzeinheit auf, sondern ist als U-förmige Scheibe ausgebildet, wobei die freien Schenkel eine Eingriffsnut 12a für eine umlaufende Vertiefung 13a an der Gewindespindel 2a bilden.

Das Verstärkungselement 8a ist in einer Aussparung 11a des Getriebegehäuses 3a angeordnet und in axialer Richtung der Gewindespindel 2a fixiert. Die Gewindespindel 2a steht ihrerseits über die Flächen der Ausnehmung 13a in axialer Richtung in Wirkverbindung mit dem Verstärkungselement 8a. Die Kontaktflächen zwischen dem Verstärkungselement 8a und der Aussparung 11a des Getriebegehäuses 3a sowie zwischen der Gewindespindel 2a und dem Verstärkungselement 8a sind so bemessen, dass im Falle eines Crahsfalls die auftretenden Belastungen der Verstellvorrichtung 1a zuverlässig von dem Getriebegehäuse 3a über das Verstärkungselement 8a auf die Gewindespindel 2a übertragen werden, ohne dass es zu einem Kollabieren der Gewindespindel 2a kommt. Die Kraft wird bei einem Unfall dabei über die zu verstellende Sitzeinheit 5 auf das Getriebegehäuse 3a übertragen, welches entsprechend ausgestaltet ist. Zur Verbindung mit der Sitzeinheit 5 weist das Getriebegehäuse 3a dabei Aufnahmeöffnungen 24 zur Aufnahme von Verbindungsmitteln, wie Befestigungsbolzen 10 auf.

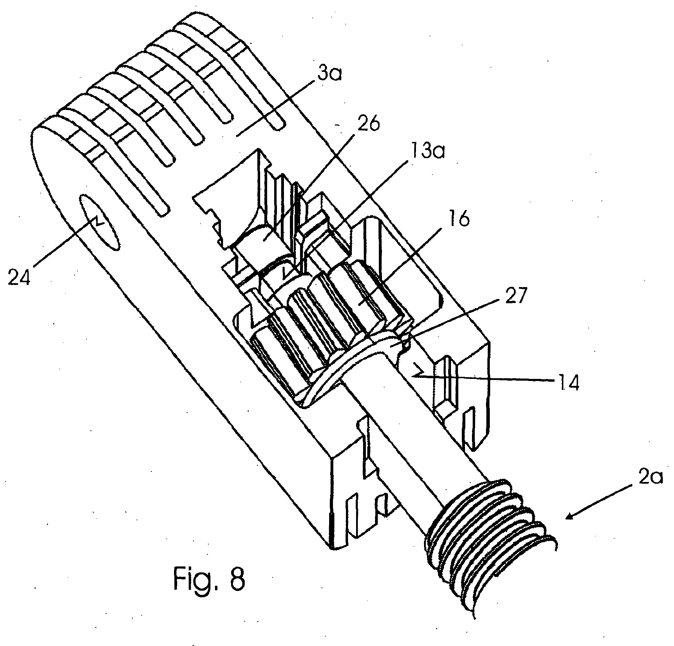

In Fig. 8 ist eine Anordnungsmöglichkeit der Gewindespindel 2a in dem Getriebegehäuse 3a einer weiteren Ausführungsform der Verstellvorrichtung dargestellt. Gegenüber der in den Fig. 6 und 7 dargestellten zweiten Ausführungsform der Verstellvorrichtung 1a unterscheidet sich die Anordnung der Gewindespindel 2a im Getriebegehäuse 3a dadurch, dass zwischen dem Schneckenrad 16 und dem die Aussparung 14 aufweisenden Abschnitt des Getriebegehäuses 3a ein zweites, U-förmiges Verstärkungselement 27 angeordnet ist. Dieses liegt einerseits an dem die Aussparung 14 umgebenden Bereich des Getriebegehäuses 3a und andererseits an dem Schneckenrad 16 an, wobei auch eine Anordnung wählbar ist, bei der das zweite Verstärkungselement 27 erst im Crashfall in Kontakt mit dem Schneckenrad 16 und/oder dem Getriebegehäuse 3a kommt.

Das zweite Verstärkungselement 27 wirkt ergänzend durch eine Vergrößerung der Kontaktflächen einem Kollabieren der Gewindespindel 2a im Falle von auftretenden Belastungen in Folge eines Crashfalls entgegen. Zur Steigerung der Zuverlässigkeit kann das Schneckenrad 16 dabei auf einem umlaufenden Absatz der Gewindespindel 2a angeordnet sein, welcher im Crashfall eine verbesserte Abstützung für das Verstärkungselement 27 bietet.

## Patentansprüche

1. Verstellvorrichtung, insbesondere Höhen- oder Längsverstellvorrichtung für Kraftfahrzeugsitze, mit
- einer Gewindespindel, die einenends in einem Getriebegehäuse und anderenends in einer Aufnahmeeinheit, die ein an das Spindelgewinde angepasstes Innengewinde aufweist, drehbar gelagert ist und
- einer Motoreinheit, die mit der Gewindespindel in Wirkverbindung steht,
wobei ein Verstärkungselement (8) derart in dem Getriebegehäuse (3) angeordnet ist, dass
- das Verstärkungselement (8) zur Aufnahme von in einem Crashfall in Längsachsenrichtung der Gewindespindel (2) wirkender Kräfte geeignet ist,
- das Verstärkungselement (8) die auftretenden Kräfte sowohl zwischen der Gewindespindel (2) und dem Verstärkungselement (8) als auch zwischen dem Verstärkungselement (8) und dem Getriebegehäuse (3) überträgt, und
- das Verstärkungselement (8) eine Eingriffsnut (12) zur Aufnahme eines eine umlaufende Vertiefung (13) aufweisenden Abschnitts der Gewindespindel (2) aufweist,
**dadurch gekennzeichnet, dass**
das Verstärkungselement (8) zur Verbindung mit der zu verstellenden Sitzeinheit (5) Aufnahmeöffnungen (9) zur Anordnung von Verbindungsmitteln (10) aufweist, wobei das Verstärkungselement (8) U-förmig ausgebildet ist, wobei die freien Schenkel (15) mit Aufnahmeöffnungen (9) für die Verbindungsmittel (10) versehen sind und der sich zwischen den Schenkeln (15) erstreckende Abschnitt die Eingriffsnut (12) aufweist.

2. Verstellvorrichtung nach Anspruch 1, **dadurch gekennzeichnet, dass** das Verstärkungselement (8) zur Aufnahme von in Längsachsenrichtung auf die Gewindespindel (2) wirkender Zug- und/oder Druckkräfte ausgebildet ist.

3. Verstellvorrichtung nach Anspruch 1 oder 2, **dadurch gekennzeichnet, dass** das Verstärkungselement (8) im Normalbetrieb derart berührungslos gegenüber der Gewindespindel (2) angeordnet ist, dass diese erst im Crashfall in Kontakt mit dem Verstärkungselement (8) kommt.

4. Verstellvorrichtung nach einem der vorhergehenden Ansprüche, **dadurch gekennzeichnet, dass** das Verstärkungselement (8) derart in dem Getriebegehäuse (3) angeordnet ist, dass es einerseits zur Anbindung an einer zu verstellenden Sitzeinheit (5) und andererseits zur Aufnahme von in einem Crashfall in Längsachsenrichtung der Gewindespindel (2) wirkender Kräfte geeignet ist.

5. Verstellvorrichtung nach einem der vorhergehenden Ansprüche, **dadurch gekennzeichnet, dass** das Verstärkungselement (8) derart angeordnet ist, dass die Verbindungsmittel (10) im Normalbetrieb im Abstand von den Aufnahmeöffnungen (9) anordbar sind.

6. Verstellvorrichtung nach einem der vorhergehenden Ansprüche, **dadurch gekennzeichnet, dass** das Verstärkungselement (8) im Normalbetrieb im Abstand von der Vertiefung (13) angeordnet ist.

7. Verstellvorrichtung nach einem der vorhergehenden Ansprüche, **dadurch gekennzeichnet, dass** die Verbindungsmittel (10) und/oder die Aufnahmeöffnungen (9) Gleiteigenschaften aufweisen, insbesondere zumindest abschnittsweise mit Kunststoff umspritzt sind.

8. Verstellvorrichtung nach einem der vorhergehenden Ansprüche, **dadurch gekennzeichnet, dass** der sich zwischen den beiden Schenkeln (15) erstreckende Abschnitt, vorzugsweise der sich um die Eingriffsnut (12) angeordnete Bereich des Abschnitts, insbesondere der unterhalb der Eingriffsnut (12) angeordnete Bereich des Abschnitts eine gegenüber den freien Schenkeln (15) höhere Materialdicke aufweist.

9. Verstellvorrichtung nach einem der vorhergehenden Ansprüche, **dadurch gekennzeichnet, dass** das Getriebegehäuse (3) aus einem Kunststoff, insbesondere glasfaserverstärktem Kunststoff gebildet ist.

10. Verstellvorrichtung nach einem der vorhergehenden Ansprüche, **dadurch gekennzeichnet, dass** das Getriebegehäuse (3) um das Verstärkungselement (8) herum durch Kunststoffspritzen hergestellt ist.

11. Verstellvorrichtung nach einem der vorhergehenden Ansprüche, **dadurch gekennzeichnet, dass** das Verstärkungselement (8) als Stanzbiegeteil ausgebildet ist.

12. Verstellvorrichtung nach einem der vorhergehenden Ansprüche, **dadurch gekennzeichnet, dass** die Motoreinheit (22) durch einen Elektromotor gebildet ist, wobei ein auf der Abtriebswelle des Elektromotors angeordnetes erstes Verzahnungselement, insbesondere eine Schnecke im Getriebegehäuse (3) zum Antrieb der Gewindespindel (2) mit einem im Bereich des Getriebegehäuses (3) auf der Gewindespindel (2) angeordneten zweiten Verzahnungselement, insbesondere einem Schneckenrad (16) in Eingriff befindlich ist.

13. Sitzuntergestell für Kraftfahrzeugsitze mit einer Verstellvorrichtung, insbesondere einer Sitzhöhenverstellung, gemäß einem der Ansprüche 1 - 9, mit einer ersten und einer zweiten, relativ zueinander verstellbaren Sitzstruktur, **dadurch gekennzeichnet, dass** die Aufnahmeeinheit (4) mit ihrem dem Getriebegehäuse (3) abgewandten Ende mit der ersten (6) und das Getriebegehäuse (3) mit der zweiten Sitzstruktur (7) verbunden ist.

## Claims

1. An adjusting device, in particular a height or longitudinal adjusting device for motor vehicle seats, having:
- a threaded spindle that is rotatably mounted at one end in a gearbox and is rotatably mounted at the other end in a receiving unit which has an inner thread adapted to the spindle thread, and
- a motor unit that is operatively connected to the threaded spindle,
wherein a reinforcement element (8) is arranged in the gearbox (3) such that
- the reinforcement element (8) is suitable for absorbing forces acting in the direction of the longitudinal axis of the threaded spindle (2) in a crash,
- the reinforcement element (8) transmits the occurring forces both between the threaded spindle (2) and the reinforcement element (8) and between the reinforcement element (8) and the gearbox (3), and
- the reinforcement element (8) has an engagement groove (12) for receiving a section of the threaded spindle (2) having a peripheral recess (13),
**characterized in that**
the reinforcement element (8) has receiving openings (9) for arranging connecting means (10) to connect with the seat unit (5) to be adjusted, wherein the reinforcement element (8) is designed U-shaped, wherein the free legs (15) are provided with receiving openings (9) for the connecting means (10), and the section extending between the legs (15) has the engagement groove (12).

2. The adjusting device according to claim 1, **characterized in that** the reinforcement element (8) is designed to absorb traction and/or pressure exerted on the threaded spindle (2) in the direction of the longitudinal axis.

3. The adjusting device according to claim 1 or 2, **characterized in that** the reinforcement element (8) is arranged free of contact with the threaded spindle (2) during normal operation such that it only comes into contact with the reinforcement element (8) in a crash.

4. The adjusting device according to one of the preceding claims, **characterized in that** the reinforcement element (8) is arranged in the gearbox (3) such that, on the one hand, it is suitable for connecting to a seat unit (5) to be adjusted and, on the other hand, it is suitable for absorbing force acting in the direction of the longitudinal axis of the threaded spindle (2) in a crash.

5. The adjusting device according to one of the preceding claims, **characterized in that** the reinforcement element (8) is arranged such that the connecting means (10) can be arranged at a distance from the receiving openings (9) during normal operation.

6. The adjusting device according to one of the preceding claims, **characterized in that** the reinforcement element (8) is arranged at a distance from the recess (13) during normal operation.

7. The adjusting device according to one of the preceding claims, **characterized in that** the connecting means (10) and/or the receiving openings (9) have anti-frictional properties, in particular are at least sectionally over-moulded with plastic.

8. The adjusting device according to one of the preceding claims, **characterized in that** the section extending between the two legs (15), preferably the area of the section arranged around the engagement groove (12), in particular the area of the section below the engagement groove (12), has a greater material thickness than the free legs (15).

9. The adjusting device according to one of the preceding claims, **characterized in that** the gearbox (3) is formed from a plastic, in particular a glass-fibre reinforced plastic.

10. The adjusting device according to one of the preceding claims, **characterized in that** the gearbox (3) is produced around the reinforcement element (8) by plastic injection moulding.

11. The adjusting device according to one of the preceding claims, **characterized in that** the reinforcement element (8) is designed as a punch-bent part.

12. The adjusting device according to one of the preceding claims, **characterized in that** the motor unit (22) is formed by an electric motor, wherein a first toothed element arranged on the output shaft of the electric motor, in particular a worm in the gearbox (3), is engaged with a second toothed element, in particular a worm gear (16), arranged in the area of the gearbox (3) on the threaded spindle (2) for driving the threaded spindle (2).

13. A seat underframe for motor vehicle seats having an adjusting device, in particular a seat height adjustment, according to one of claims 1-9, having a first and a second seat structure that are adjustable relative to each other, **characterized in that** the end of the receiving unit (4) facing away from the gearbox (3) is connected to the first seat structure (6), and the gearbox (3) is connected to the second seat structure (7).

## Revendications

1. Dispositif de réglage, en particulier dispositif de réglage en hauteur ou en longueur, pour des sièges de véhicules automobiles, avec
- une broche filetée qui est supportée en rotation dans un carter d'engrenages à une extrémité et, à l'autre extrémité, dans une unité de logement qui présente un filet intérieur adapté au filet de la broche, et
- une unité de moteur qui est en liaison active avec la broche filetée,
un élément de renfort (8) étant disposé dans le carter d'engrenages (3) de telle sorte que
- l'élément de renfort (8) est approprié pour absorber des forces agissant, en cas de collision, dans la direction d'axe longitudinal de la broche filetée (2),
- l'élément de renfort (8) transfert les forces survenant à la fois entre la broche filetée (2) et l'élément de renfort (8) et entre l'élément de renfort (8) et le carter d'engrenages (3), et
- l'élément de renfort (8) présente une rainure d'engagement (12) pour loger un segment de la broche filetée (2) présentant un creusement (13) périphérique,
**caractérisé en ce que**,
pour le raccordement à l'unité de siège (5) à régler, l'élément de renfort (8) présente des ouvertures de réception (9) pour l'agencement de moyens de raccordement (10), l'élément de renfort (8) est constitué en forme de U, les branches (15) libres étant munies d'ouvertures de réception (9) pour les moyens de raccordement (10), et le segment s'étendant entre les branches (15) présentant la rainure d'engagement (12).

2. Dispositif de réglage selon la revendication 1, **caractérisé en ce que** l'élément de renfort (8) est constitué pour absorber des forces de traction et/ou de pression agissant sur la broche filetée (2) dans la direction d'axe longitudinal.

3. Dispositif de réglage selon la revendication 1 ou 2, **caractérisé en ce que** l'élément de renfort (8) est, en fonctionnement normal, disposé sans contact en face de la broche filetée (2) de telle sorte que celle-ci n'entre en contact avec l'élément de renfort (8) qu'en cas de collision.

4. Dispositif de réglage selon une des revendications précédentes, **caractérisé en ce que** l'élément de renfort (8) est disposé dans le carter d'engrenages (3) de telle sorte qu'il est approprié d'une part pour la liaison avec une unité de siège (5) à régler et d'autre part pour absorber des forces agissant dans la direction d'axe longitudinal de la broche filetée (2) en cas de collision.

5. Dispositif de réglage selon une des revendications précédentes, **caractérisé en ce que** l'élément de renfort (8) est disposé de telle sorte que les moyens de raccordement (10), en fonctionnement normal, peuvent être disposés à distance des ouvertures de réception (9).

6. Dispositif de réglage selon une des revendications précédentes, **caractérisé en ce que** l'élément de renfort (8) est, en fonctionnement normal, disposé de préférence à distance du creusement (13).

7. Dispositif de réglage selon une des revendications précédentes, **caractérisé en ce que** les moyens de raccordement (10) et/ou les ouvertures de réception (9) présentent des caractéristiques de glissement, en particulier elles sont enrobées de matière plastique au moins par tronçons.

8. Dispositif de réglage selon une des revendications précédentes, **caractérisé en ce que** le segment s'étendant entre les deux branches (15), de préférence la zone du segment disposée autour de la rainure d'engagement (12), en particulier la zone du segment disposée au-dessous de la rainure d'engagement (12), présente une épaisseur de matériau plus élevée par rapport aux branches (15) libres.

9. Dispositif de réglage selon une des revendications précédentes, **caractérisé en ce que** le carter d'engrenages (3) est réalisé en matière plastique, en particulier une matière plastique renforcée de fibres de verre.

10. Dispositif de réglage selon une des revendications précédentes, **caractérisé en ce que** le carter d'engrenages (3) est réalisé par injection de matière plastique tout autour de l'élément de renfort (8).

11. Dispositif de réglage selon une des revendications précédentes, **caractérisé en ce que** l'élément de renfort (8) est constitué en tant que pièce estampée et pliée.

12. Dispositif de réglage selon une des revendications précédentes, **caractérisé en ce que** l'unité de moteur (22) est formée par un moteur électrique, un premier élément d'engrènement disposé sur l'arbre de sortie du moteur électrique, en particulier une vis sans fin dans le carter d'engrenages (3), étant, pour l'entraînement de la broche filetée (2), en prise avec un deuxième élément d'engrènement disposé dans la zone du carter d'engrenages (3) sur la broche filetée (2), en particulier avec une roue à vis sans fin (16).

13. Châssis d'assise de siège pour sièges de véhicules automobiles, avec un dispositif de réglage, en particulier un réglage en hauteur du siège selon une des revendications 1-9, avec une première et une deuxième structure de siège qui peuvent être déplacées l'une par rapport à l'autre, **caractérisé en ce que** l'unité de logement (4) est, par son extrémité éloignée du carter d'engrenages (3), raccordée à la première structure de siège (6), et le carter d'engrenages (3) est raccordé à la deuxième structure de siège (7).
